# EUROPEAN PATENT APPLICATION

(11) **EP 2 216 305 A1**
(43) Date of publication of application: **11.08.2010**
(21) Application number: 08855246.8
(22) Date of filing: 27.11.2008
(51) Int. Cl.: C04B 26/18, C04B 22/04, C04B 22/06, H05F 3/00, B29C 43/56

(54) **METHOD FOR PRODUCING AN ANTISTATIC ARTICLE MADE FROM AGGLOMERATED STONE AND RESULTING ARTICLE**

(30) Priority: 27.11.2007 ES 200703142
(71) Applicant: Cosentino, S.a., 04850 Cantoria (Almeria) (ES)
(72) Inventor: RAMON MORENO, José, Luis, E-04850 Cantoria (almería) (ES); RODRÍGUEZ GARCÍA, Salvador, Cristóbal, E-04850 Cantoria (almería) (ES); SIERRA MARTÍN, Benjamín, E-04850 Cantoria (almería) (ES); POZAS BRAVO, Raúl, E-04850 Cantoria (almería) (ES); BENITO LÓPEZ, José, Manuel, E-04850 Cantoria (almería) (ES); MEDINA JIMÉNEZ, Adrián, E-04850 Cantoria (almería) (ES)
(74) Representative: Carpintero Lopez, Francisco
(86) International application number: PCT/ES2008/000743
(87) International publication number: WO 2009/068714

(57) **Abstract**

The invention relates to a method for manufacturing an agglomerated stone item, for example a slab for construction or decoration, comprising the steps of: contacting (i) the inorganic filler, (ii) a precursor composition of a polyester resin and (iii) a powdered electrically conductive component, and mixing until obtaining a homogeneous manufacturing mass; distributing a part of said mass on a support; pressing the part of distributed mass in a vibrocompaction press under vacuum conditions; and hardening the mass by polymerization of the polyester resin.

## Description

### Field of the Invention

The present invention relates to a new method for obtaining an antistatic agglomerated stone item which comprises a step of vacuum vibrocompression and subsequently a step of heating. The invention also relates to said agglomerated stone item obtainable by means of the method and is **characterized in that** the accumulation of electric charges in its surface is reduced or eliminated.

### Background of the Invention

Patent ES 2187313 B1 describes a method for manufacturing artificial stone slabs especially applicable to construction and/or decoration made up of: (i) an inorganic filler formed by a mixture of ground materials of a different grain size of silicas, glass, granites, quartz, ferrosilicon, among other materials, and (ii) polyester resin. The resin is initially in the form of polymers (before the cross-linking thereof), in liquid state, and it is homogenously mixed with the inorganic filler. The resulting homogenous mass is subjected to pressing by means of vacuum vibrocompression and is subsequently hardened by heating.

Traditionally, the agglomerated stone items have problems of accumulation of static charge in their surface, due to the high resistance to the passage of current offered by the main components of this type of material, the unsaturated polyester resin and the silica with resistivity values at 20ºC of about 10¹²-10¹³ Ω.m and 10¹⁷ Ω.m, respectively. These problems of accumulation of static charge usually arise when there is friction with other objects or people, which is known as triboelectric effect. These resistivity values indicate that the problem of static charge in the agglomerate is not exclusively caused by the polyester resin, but rather that the inorganic filler has an even more important role.

Many of the solutions considered up until now for the problem of static charge relate to mass additives which are incorporated to the resin polymerization chain, which have the drawback that they considerably reduce the mechanical properties thereof.

In other cases, the solutions comprise introducing dispersed additives in the resin, such as carbon black, for example, as described in international application WO 2006/072553 A1, such that at least a part of the entire manufacturing mass will have a dark tone or move in color scales from white to black. The drawback of this proposal is that it limits the polychromatism of the items obtained.

There is therefore still a need in the state of the art to provide an alternative method for obtaining antistatic artificial stone items overcoming the aforementioned drawbacks.

### Brief Description of the Drawings

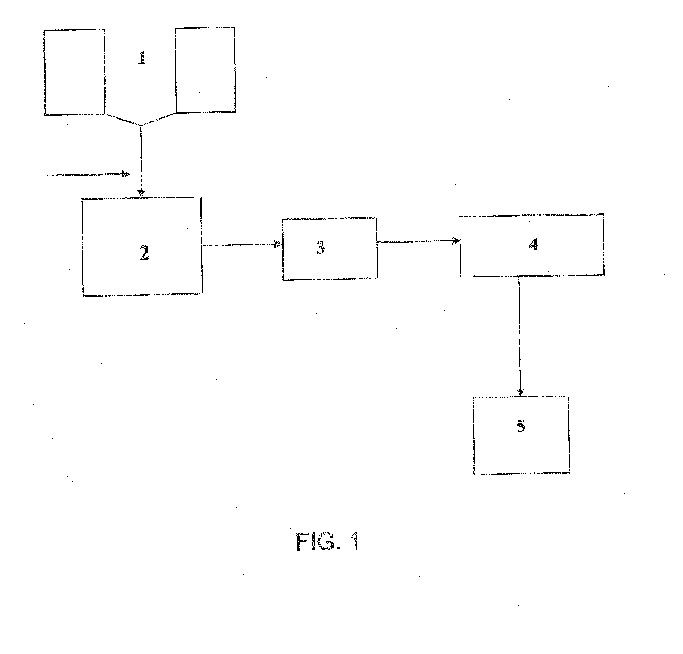

Figure 1 shows a diagram of a plant for producing an item according to the invention in which: (1) are the planetary mixers; (2) homogenization ring; (3) distributor; (4) press; (5) oven.

### Object of the Invention

An object of the present invention relates to a new method for manufacturing an agglomerated stone item which comprises adding a powdered electrically conductive component to a manufacturing mixture formed by a binder and an inorganic filler. Said electrically conductive component is selected from among:
Group A): consisting of silicon, zinc, nickel, aluminium, tin, copper, gold, silver, platinum and mixtures thereof;
Group B): consisting of germanium oxide (GeO), titanium dioxide (TiO₂) and tin oxide (SnO) and mixtures thereof;
Group C): consisting of zinc oxide (ZnO) doped with aluminium oxide (Al₂O₃), ITO (indium tin oxide) and mixtures thereof; and
   silicon carbide.

In a preferred embodiment, the electrically conductive component is silicon.

The addition can be (i) directly on the mixture previously formed by a binder and an inorganic filler, or alternatively, (ii) the powdered electrically conductive component can be previously added to a part of the binder, it is then dispersed, and the resulting dispersion is added to the mixture formed by the remaining binder and an inorganic filler.

Another object of the present invention relates to an agglomerated stone item which can be obtained by means of the method of the invention.

An additional object relates to the use of said item in construction and decoration.

### Description of the Invention

The present invention provides, in one aspect, a method for obtaining an agglomerated stone item from a manufacturing mass which consists of a mixture comprising a binder, an inorganic filler and a powdered electrically conductive component. The method, hereinafter method of the invention, comprises a step of pressing said mixture by vacuum vibrocompression and subsequently hardening by heat, such that the accumulation of electric charges in its surface is reduced or eliminated. The agglomerated stone item obtained is suitable for its use in construction and decoration, for example.

The method of the invention comprises adding a powdered electrically conductive component to a binder and an inorganic filler in a suitable manner in a specific step during the method for manufacturing. The result is an item which achieves preventing the accumulation of static charge therein.

The electrically conductive component can be selected from among the following:
Group A): consisting of silicon, zinc, nickel, aluminium, tin, copper, gold, silver, platinum and mixtures thereof;
Group B): consisting of GeO, TiO₂ and SnO and mixtures thereof;
Group C): consisting of ZnO doped with aluminium oxide, ITO (indium tin oxide) and mixtures thereof; and silicon carbide.

In a particular embodiment, the component is selected from Group A) consisting of silicon, zinc, nickel, aluminium, tin, copper, gold, silver, platinum and mixtures thereof. According to this particular embodiment, the electrically conductive component is incorporated ground in a grain size generally equal to or less than 0.1 mm, and in an amount comprised between 0.5 and 2% by weight with respect to the total weight of the manufacturing mass. In a preferred embodiment, said the electrically conductive component is silicon.

In another particular embodiment, the component is selected from Group B) consisting of GeO, TiO₂ and SnO and mixtures thereof. According to this particular embodiment, the electrically conductive component is incorporated ground in a grain size generally equal to or less than 0.1 mm, and in an amount comprised between 8 and 12% by weight with respect to the total weight of the manufacturing mass. In a particular embodiment, the component is TiO₂.

In another particular embodiment, the component is selected from Group C) consisting of ZnO doped with aluminium oxide, ITO (indium tin oxide) and mixtures thereof. According to this particular embodiment, the electrically conductive component is incorporated ground in a grain size generally equal to or less than 500 nm, and in an amount comprised between 0.5 and 2% by weight with respect to the total weight of the manufacturing mass.

Finally, and according to another particular embodiment, the component is silicon carbide which is incorporated ground in a grain size generally equal to or less than 0.1 mm, and in an amount comprised between 8 and 12% by weight with respect to the total weight of the manufacturing mass.

The powdered electrically conductive component is added:
(i) directly on the mixture formed by a binder and an inorganic filler, and it is then dispersed to obtain the manufacturing mass, or alternatively,
(ii) the electrically conductive component is previously added to a part of the binder, the latter is dispersed, and the resulting dispersion of the component and binder is added to the mixture formed by the rest of the binder and the inorganic filler to obtain the manufacturing mass.

The method of the invention furthermore comprises the following conventional steps:
- distributing a part of the manufacturing mass on a support;
- molding and pressing the distributed mass in a vibrocompaction press under vacuum conditions;
- hardening the mass by applying heat.

Once the mass is hardened by means of applying heat, the hardened item obtained can be subjected to a series of conventional subsequent operations typical of the preparation of any natural stone, for its final finish; said steps comprise cooling the product obtained and mechanical treatments such as calibrating, polishing and cutting according to the desired final dimensions.

The manufactured agglomerated stone item is generally in the form of a slab because it is usually intended for the construction of work surfaces, stairways, floors, bathrooms, tables etc. Nevertheless the item obtained by means of the method of the invention can be manufactured with any desired shape and dimensions.

The inorganic filler used is a conventional inorganic filler and can comprise, for example, a mixture of ground materials with a conventional and variable grain size of one or more materials conventionally used in the manufacture of agglomerated stone items. These materials include marble, dolomite, silica, glass, mirror, cristobalite, granite, opaque quartz, crystalline quartz, feldspar, basalt, and ferrosilicon material, among others. The inorganic filler is selected such that it is compatible with the adhesion promoter used in the binder. The inorganic filler is obtained either commercially or by selecting and grinding the inorganic starting materials to the desired grain size and mixing them in suitable ratios to obtain the desired final appearance of the agglomerated stone item.

In a particular embodiment, one or more of the following inorganic materials is used in one of the following preferred percentages:
- 30-35% micronized cristobalite;
- 50-60% micronized silica;
- 5-8% ground silica;
- 30-35% feldspar,
   such that the sum of the selected percentages is obviously 100% of the total inorganic filler of the manufacturing mass.

The percentages indicated above are expressed by weight with respect to the total weight of the manufacturing mass. The exact percentage of each material and of each grain size will depend on the aesthetic characteristics of the item to be obtained and on the desired visual effect.

The binder is prepared in the conventional manner, generally following the instructions of the commercial product acquired in each case. Said binder generally comprises:
A commercially obtainable conventional polyester resin, preferably an unsaturated orthophthalic polyester resin,
   a catalyst,
   an accelerator,
   an adhesion promoter and optionally
   an additive such as a coloring agent or a biocidal agent.

All the components are conventional. In a particular embodiment, the catalyst is an organic peroxide, *tert*-butyl perbenzoate, for example, which catalyzes the polymerization at a temperature of approximately 80ºC. The catalyst is added in a typical percentage of 2% by weight with respect to the weight of the polyester resin. In relation to the accelerator, a conventional accelerator such as a cobalt accelerator, for example, can be used, such as cobalt octoate with 6% cobalt, and in an amount of 0.2% by weight with respect to the weight of the polyester resin. The adhesion promoter provides the binding between the polyester resin and the inorganic filler. A silane is generally used. In a particular embodiment, 3-trimethoxysilylpropyl methacrylate, typically in an amount comprised between 1% and 2% by weight with respect to the weight of the polyester resin, is used. One or more additives, such as a biocidal agent, a coloring agent etc., can furthermore be added to this resin. In this sense, the various colors in the agglomerated stone item are achieved by optionally adding one or more coloring agents, such as inorganic oxides, for example, such as iron oxide or titanium dioxide. The amount of coloring agent is variable depending on the desired color intensity. In a particular embodiment, it is 10-12% by weight with respect to the weight of the polyester resin.

The resin and the mineral filler are mixed in the planetary mixers (1) of the production plant.

The incorporation of the electrically conductive component is performed in the manufacturing plant after the planetary mixers (1), a step in which a more intense mixing occurs, so that the film to be formed is not dispersed too much in the resin and the desired effect decreases. For the objective sought, the homogenization of the conductive powder is performed in the homogenization ring (2). Thus, the mixing method is the same as for conventional slabs, the optimal amount of mass in the planetary mixers for the correct homogenization of the mixture being between 1000 and 2000 Kg.

The powder of the electrically conductive component can be sprinkled on the mixture of binder and inorganic filler, for which a spreading system which can move longitudinally and cover the entire mass in the sprinkling process is assembled on the bridge of the homogenization ring (2). At the same time as the electrically conductive component is sprinkled, the mass is stirred by means of the blades of the ring until its homogenization (2).

As has been mentioned above according to alternative (ii), the electrically conductive component is previously added to a part of the binder generally comprised between 2 and 5% by weight with respect to the total mass of the binder; it is then dispersed, and the resulting dispersion is added to the mixture formed by the rest of the binder and the inorganic filler, to finally obtain the manufacturing mass in (2).

The homogeneous manufacturing mass is carried by means of a conveyor belt to a distributor (3) which places a part of the mass on a support in the desired shape, such as in the form of a slab, for example. The size of the mold used will be that which determines the size of the slab, whereas the thickness will be established by the amount of mass placed in the mold. The mold is protected with a polymer film or paper and is then led to a vacuum vibrocompression press (4), in which the material is compacted for 2 or 3 minutes.

Once pressed, the slab is led to an oven (5), the set point temperature of which is placed between 80 and 110ºC, the cross-linking of the polyester resin being triggered, which provides the slab with hardness. The dwell time in the oven ranges between 20 and 40 minutes.

Once the slab is removed from the oven and left to cool, the mechanical treatments typical of the preparation of any natural stone, such as marble or granite, are performed on it. The slabs obtained are suitable for their use in indoor floors and stairways, as well as in any type of work surface in which an accumulation of static charge can occur due to the friction of objects with the surface (triboelectric effect).

According to the method of the present invention, the different appearance of the slabs is controlled by means of the variation of the composition and the grain size of the different materials of the inorganic filler. Likewise, one or more manufacturing masses of different colors can be used, which can be mixed without a color transfer occurring between them, obtaining a two-color product, three-color product, etc.

The antistatic effect of the items obtained according to the method of the invention is based on adding to the item a powdered electrically conductive component, which allows draining the accumulated charge to ground, solving the problems of accumulation. The powdered electrically conductive component induces the formation of thin films forming a three-dimensional network around the "aggregates of material" which are formed after the stirring in the planetary mixers, such that an electric path towards the floor is created for the dissipation of the static charge which can accumulate. It is important for the charge of the electrically conductive component to be completely homogenized in the entire agglomerated stone item.

When making the items according to the invention, it is necessary to take into account that the mineral fillers which are initially mixed are later wetted with the resin. To that end, the inventors have surprisingly discovered that if the electrically conductive component is added together with the mineral fillers and homogenized in the planetary mixers, upon being wetted by the resin, the electric chain breaks (there is no contact between the particles of the electrically conductive component), and the problem of the accumulation of static charge is not solved. According to an alternative, a metering system is added between the mixers and the homogenization ring, such that the powdered electrically conductive component is added once the resin has already been homogenized with the mineral fillers. In the event that the electrically conductive component has been previously dispersed in a part of the resin and is then added in the form of a streak to the rest of the mixture of inorganic fillers and the rest of the resin, the high local concentrations of conductor in the streaks will likewise allow achieving the desired effect in those areas. In both ways, the contact between the different particles of the electrically conductive component is facilitated, which allows the draining of the static charge generated.

It must be emphasized that the agglomerated stone item obtained by the method of the invention has the electric qualification of insulator, to prevent conducting electric charges which can cause risk situations. To that end, the artificial stone slabs thus obtained are especially suitable for their placement in indoor floors and stairways, as well as in any type of work surface in which an accumulation of static charge can occur due to the friction of objects with the surface.

In a preferred embodiment, the item obtained is a slab, more preferably a quartz agglomerate slab.

The slab of the following invention has a series of advantageous properties with respect to conventional slabs. In this sense, the slab obtained by means of the method of the invention (see Example 1) shows a lower resistivity with respect to a conventional slab, as shown in Table 1, although assuring the insulator condition. With respect to the dissipation time (time taken by the charge of the part to fall from 1 kV to 100 V), the slab of the present invention has a lower dissipation time than a conventional slab (Slab 2), and finally, the maximum electrostatic charge acquired by a person walking with a rubber or leather sole on a slab of the invention for a time sufficient to reach the steady state is lower than the charge of a conventional slab (Slab 3).

The maximum electrostatic charge generated in an antistatic floor formed by slabs according to the invention is much lower than the sensitivity threshold (2.5-3 kV), therefore people will not perceive electric discharges upon coming into contact with other conductors.

Illustrative examples of the invention are presented below for the purpose of better understanding such invention, and by no means should they be considered to be a limitation of the scope thereof.

### Examples

### Example 1: Obtaining an antistatic slab with metallic Si.

A slab with antistatic properties has been manufactured from 5 Kg of a homogeneous manufacturing mass having the following composition (percentages expressed by weight with respect to the total weight of the homogeneous mass):

| | | |
|---|---|---|
| a) Inorganic filler: | | |
| | Micronized silica: | 26%. |
| | Ground silica: | 64.2%. |
| b) Metallic silicon: | | 0.8%. |
| c) Binder: | | 9% comprising: |
| • unsaturated orthophthalic polyester resin; | | |
| • 3-trimethoxysilylpropyl methacrylate (1% with respect to the resin), | | |
| • tert-butyl perbenzoate (2% with respect to the resin), | | |
| • cobalt octoate (0.2% with respect to the resin), | | |
| • triclosan (0.5% with respect to the resin), and | | |
| • titanium dioxide (10% with respect to the resin). | | |

The method for manufacturing the slab was carried out with this composition according to the following steps:

The micronized silica and the ground silica were mixed until their complete homogenization in the planetary mixers; and on the other hand the additives indicated above were added to the polyester resin to obtain the binder. The silicone was then ground (grain size not exceeding 0.1 mm) and added to the mixture of silicas and binder such that the "aggregates of material" which were formed were coated with the silicon metal powder. The resulting mixture was mixed in the homogenization ring until a homogeneous manufacturing mass was obtained which was led in a conveyor belt from the outlet of the homogenization ring (2) to the distributor (3). Then, 2000 Kg of homogeneous manufacturing mass were unloaded in the distributor to make a slab with dimensions of 1.40 x 3.00 m. The distributed mass in the form of a slab was molded by means of a vacuum vibrocompression press (4). The pressing time was 2 minutes and the parts were coated with Kraft paper. Finally, the homogeneous mass was hardened in an oven (5) at 90ºC for a time of 40 minutes. Finally, the slab was cooled until reaching room temperature, was calibrated, polished and cut.

The slab thus obtained was subjected to subsequent electrical studies aimed at comparing its properties with conventional slabs. As a particularity in the method for manufacturing it should be emphasized that the metallic silicon was added subsequently to the mixing of the inorganic fillers with the polyester resin, such that coatings were formed on the agglomerates of material which allowed the dissipation of the static charge which is generated.

Table slab 1 shows the electric resistivity of a conventional slab and of a slab with antistatic properties according to the present invention, in which a small decrease of the resistivity can be observed with respect to the conventional slab, although assuring the insulator condition.

The measurements made are based on the standards IEC UNE-EN 61340-2-1: Measurement methods: Test to measure the ability of materials and products to dissipate static electric charge; and IEC UNE-EN 61340-2-3: Method of test for determining the resistance and resistivity of a solid planar material used to avoid electrostatic charge accumulation.

**Table 1. Electric resistivity of conventional slabs and the antistatic slabs of the invention.**

| | **ELECTRIC RESISTIVITY** |
|---|---|
| **Conventional slab** | 10¹² - 10¹³ Ω.m |
| **Antistatic slab** | 10⁹ - 10¹⁰ Ω.m |

Table 2 shows the variation in the dissipation times of the static charge produced by an electrostatic field generator in conventional and antistatic slabs according to the invention, dissipation time being understood as the time taken by the charge of the part to fall from 1 kV to 100 V.

**Table 2. Dissipation time of the charge generated in conventional slabs and in the antistatic slabs.**

| | **Dissipation time (s)** |
|---|---|
| **Conventional slab** | > 300 |
| **Antistatic slab** | < 50 |

Table 3 shows the maximum electrostatic charge acquired by a person walking with a rubber or leather sole on each of the analyzed surfaces for a time sufficient to reach the steady state.

**Slab 3. Acquired maximum electrostatic charge.**

| | **Maximum charge (kV)** |
|---|---|
| **Conventional slab** | 4.5 |
| **Antistatic slab** | 1.5 |

The maximum electrostatic charge generated in the antistatic floor of the invention is much lower than the sensitivity threshold (2.5-3 kV), therefore people will not perceive electrostatic discharges upon coming into contact with other conductors.

### Example 2: Obtaining an antistatic slab with TiO₂.

A slab with antistatic properties has been manufactured from 6 Kg of a homogeneous manufacturing mass having the following composition (percentages expressed by weight with respect to the total weight of the homogeneous mass):

| | | |
|---|---|---|
| d) Inorganic filler: | | |
| | Micronized cristobalite: | 32%. |
| | Ground silica: | 23%. |
| | Ground feldspar: | 27.1 % |
| e) TiO₂: | | 8%. |
| f) Binder: | | 9.9% |
| comprising: | | |
| • unsaturated orthophthalic polyester resin; | | |
| • 3-trimethoxysilylpropyl methacrylate (1% with respect to the resin), | | |
| • tert-butyl perbenzoate (1.75% with respect to the resin), | | |
| • cobalt octoate (0.2% with respect to the resin), | | |
| • triclosan (0.5% with respect to the resin), and | | |
| • Coloring agent of TiO₂ and Fe₂O₃ (10% with respect to the resin). | | |

The process for manufacturing the slab is the same as that described above in Example 1.

## Claims

1. Method for manufacturing an agglomerated stone item which comprises adding a powdered electrically conductive component to a manufacturing mass comprising a mixture of binder and an inorganic filler.

2. Method according to claim 1, wherein the electrically conductive component is selected from among:
Group A): consisting of silicon, zinc, nickel, aluminium, tin, copper, gold, silver, platinum and mixtures thereof;
Group B): consisting of GeO, TiO₂ and SnO and mixtures thereof;
Group C): consisting of ZnO doped with aluminium oxide, ITO (indium tin oxide) and mixtures thereof; and silicon carbide.

3. Method according to claim 2, wherein the electrically conductive component is silicon.

4. Method according to any of claims 2 or 3, wherein the powdered metal of Group A has a grain size equal to or less than 0.1 mm.

5. Method according to any of claims 2 to 4, wherein the metal of Group A is added in an amount comprised between 0.5 and 2% by weight with respect to the total weight of the manufacturing mass.

6. Method according to claim 2, wherein the electrically conductive component is TiO₂.

7. Method according to any of claims 2 or 6, wherein the metallic oxide of Group B has a grain size equal to or less than 0.1 mm.

8. Method according to any of claims 2, 6 or 7, wherein the metallic oxide of Group B is added in an amount comprised between 8 and 12% by weight with respect to the total weight of the manufacturing mass.

9. Method according to claim 2, wherein the doped metallic oxide of Group C) has a grain size less than or equal to 500 nm.

10. Method according to claim 9, wherein the doped metallic oxide of Group C) is added in an amount comprised between 0.5 and 2% by weight with respect to the total weight of the manufacturing mass.

11. Method according to claim 2, wherein the powdered silicon carbide has a grain size equal to or less than 0.1 mm.

12. Method according to claim 11, wherein the silicon carbide is added in an amount comprised between 8 and 12% by weight with respect to the total weight of the manufacturing mass.

13. Method according to any of claims 1-12, wherein the electrically conductive component is added:
(i) on the mixture previously formed by a binder and an inorganic filler, or alternatively,
(ii) to a part of the binder followed by dispersion, and the resulting dispersion is then added to the mixture formed by the remaining binder and an inorganic filler.

14. Method according to any of claims 1 to 13, wherein the method of the invention furthermore comprises the following conventional steps:
• distributing a part of the manufacturing mass on a support;
• molding and pressing the distributed mass in a vibrocompaction press under vacuum conditions;
• hardening the mass by applying heat;
• cooling the product obtained and
• mechanically treating the product.

15. Method according to any of claims 1 to 12, wherein the inorganic filler is selected from among the following inorganic materials in one of the following percentages:
• 30-35% micronized cristobalite;
• 50-60% micronized silica;
• 5-8% ground silica;
• 30-35% feldspar,
such that the sum of the percentages is 100% of the total inorganic filler.

16. Method according to any of claims 1 to 5, 13 or 14, wherein the manufacturing mass has the following composition, in which the percentages are expressed by weight with respect to the total weight of the manufacturing mass:
| | |
|---|---|
| a) micronized silica: | 26%, |
| b) ground silica: | 64.2%, |
| c) metallic silicon: | 0.8%, |
| d) binder: | 9%, |
in which the binder comprises:
unsaturated orthophthalic polyester resin
3-trimethoxysilylpropyl methacrylate (1% by weight with respect to the resin) tert-butyl perbenzoate (2% by weight with respect to the resin),
cobalt octoate (0.2% by weight with respect to the resin),
triclosan (0.5% by weight with respect to the resin), and
titanium dioxide (10% by weight with respect to the resin).

17. Method according to any of claims 1, 2, 6-8, wherein the manufacturing mass has the following composition, in which the percentages are expressed by weight with respect to the total weight of the manufacturing mass:
a) micronized cristobalite: 32%,
b) ground silica: 23%,
c) ground feldspar 27.1 %
d) TiO₂: 8%,
e) binder: 9.9%,
in which the binder comprises:
unsaturated orthophthalic polyester resin
3-trimethoxysilylpropyl methacrylate (1 % by weight with respect to the resin) tert-butyl perbenzoate (1.75% by weight with respect to the resin),
cobalt octoate (0.2% by weight with respect to the resin),
triclosan (0.5% by weight with respect to the resin), and
titanium dioxide and iron (III) oxide (10% by weight with respect to the resin).

18. Method according to claim 13, wherein the electrically conductive component is previously added to a part of the binder generally comprised between 2 and 5% by weight with respect to the total mass of binder.

19. Agglomerated stone item obtained according to the method of any of claims 1 to 18.

20. Item according to claim 19, made of agglomerated quartz.

21. Item according to any of claims 19 or 20, in the form of a slab.

22. Use of an item according to any of claims 19 to 21, in construction or decoration.
